# EUROPEAN PATENT APPLICATION

(11) **EP 2 226 223 A1**
(43) Date of publication of application: **08.09.2010**
(21) Application number: 10155189.3
(22) Date of filing: 02.03.2010
(51) Int. Cl.: B60R 22/18

(54) **Belt coupling for safety belt buckle**

(30) Priority: 04.03.2009 KR 20090018483
(71) Applicant: HanKook Capability Co., Ltd., Pyongtaek-si Kyonggi do (KR)
(72) Inventor: Kim, Sung Kook, Kyong-ki do (KR)
(74) Representative: Vossius & Partner

(57) **Abstract**

A belt coupling (320) for a safety belt buckle (300) is provided. The belt coupling (320) has a protrusion (21) provided at a belt coupling (320) hole in which a belt (340) is wound. The protrusion (21) is bent in a semicircular shape such that its front end (211) is spaced a predetermined distance apart from one surface of the belt coupling (320) and, in the inside, a shape deformation space (212) is provided.

## Description

### BACKGROUND OF THE INVENTION

### Field of the Invention

The present invention relates to a belt coupling for a safety belt buckle. More particularly, the present invention relates to a belt coupling for a safety belt buckle in which a structure of a protrusion of a belt coupling hole in which a belt is wound is improved.

### Description of the Related Art

As well known in the art, a safety belt for safely protecting a driver and passengers from an accident is installed in a land transport means such as a vehicle as well as other vehicles (including a sea vessel and a sky aircraft). Such a safety belt operates at the time of the occurrence of an accident such as front collision, side collision, overturn, etc., and performs a function of protecting a driver and a passenger to the maximum. In the case of a vehicle, the safety belt is one of basically mounted safety devices.

In order to describe a structure of a conventional safety belt, a vehicle safety belt, for example, a 3-point type safety belt is described as its typical example.

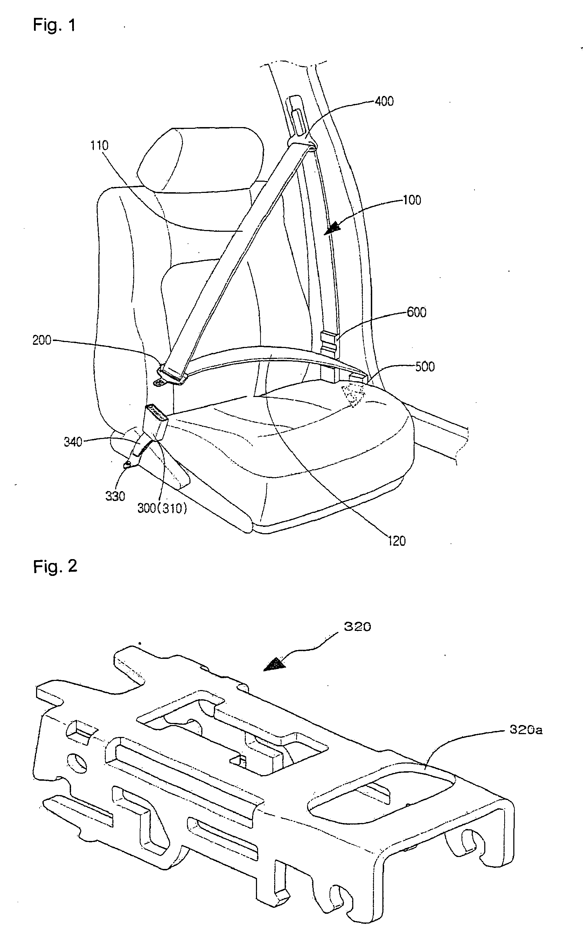

FIG. 1 is a construction diagram for describing a conventional vehicle safety belt.

Referring to FIG. 1, the conventional 3-point type safety belt includes a band shape belt 100, a retractor 600, a slip guide 400, a buckle 300, a tongue 200, and an anchor 500. The band shape belt 100 wraps the upper body of a passenger. The retractor 600 has a structure of winding and keeping the belt 100 or being elastically rotated to withdraw the belt 100 or, upon shock energy forwarding, cut off the withdrawal. The slip guide 400 guides the belt 100. The buckle 300 is installed at one side of a seat. The tongue 200 is mounted and released from the buckle 300 and is installed in the belt 100 such that the belt 100 elastically contacts with the body of the passenger. The anchor 500 fixes the belt 100 to a car body.

The belt 100 includes a shoulder belt 110 and a lap belt 120. The shoulder belt 110 restricts and supports a portion from the shoulder to the breast depending on a belt restriction position. The lap belt 120 restricts and supports the belly. The belt 100 is, at one end, rotatably and withdrawably wound, housed, and fixed to the retractor 600 fixed to the car body and, at the other end, is connected and fixed to the anchor 500 coupled and fixed to the car body. The belt 100 presently popularly used is of synthetic fiber of nylon, polyester, etc. The belt 100 is woven to have a band shape of a width of about 50 mm and a thickness of about 1.2 mm. Because having a high tensile strength, upon vehicle collision, the belt 100 restricts the passenger by a sufficient strength.

On the other hand, the buckle 300 includes a buckle part 310 and a belt coupling 320. The buckle part 310 selectively fixes the tongue 200. The belt coupling 320 fixes the buckle part 310 and in addition, connects a belt 340 fixed to a seat of a vehicle with a fixer 330. FIG. 2 is a perspective diagram for describing a construction of a conventional belt coupling of a buckle.

Referring to FIG. 2, the conventional belt coupling 320 of the buckle 300 is constructed by bending a thin metal plate in a predetermined shape and in addition puncturing a plurality of holes. The belt coupling 320 has, in the inside, a buckle part (e.g., a buckle part including a stopper, a spring, a press button, etc.) and has, at the other end, a belt coupling hole 320a punctured for connecting the belt 340 fixed to the seat.

As the belt coupling hole 320a is punctured narrower than a width of the belt, the belt is wound and connected to pass through the belt coupling hole 320a in a twice-folded state. As the belt coupling hole 320a is punctured in the belt coupling 320 of the thin plate shape, when a momentary pressure is repeatedly applied to the belt, the pressure is forwarded to an end surface of the belt coupling hole 320a as it is and damages the belt. In other words, there is a problem that, as the conventional belt coupling hole 320a is punctured in the belt coupling 320 of the thin plate shape, when a pressure is repeatedly applied to the belt, the belt coupling hole 320a is damaged. There is a problem that, as an edge surface of the belt coupling hole 320a coming in contact with the belt wound in the belt coupling hole 320a acts as a blade, the belt is cut if the pressure is repeatedly applied.

In order to solve the problem, Korean Patent Publication No. 2003-0025396 published on March 29, 2003 discloses "BUCKLE BASE WITH IMPROVED STRUCTURE AND ITS MANUFACTURING METHOD" for improving a durability of a belt and a strength performance of a belt coupling (i.e., a buckle base) by integrally forming a first protrusion in a belt coupling hole (i.e., a long hole) and decreasing a surface pressure acted on the belt. In Korean Patent Publication No. 2003-0025396, construction is of a type in which a first protrusion protrudes from one side surface of a belt coupling hole (i.e., a long hole), a type in which a first protrusion and a second protrusion protrude from one side surface and the other side surface of a belt coupling hole (i.e., a long hole), respectively, and a type in which a first protrusion is of a cylindrical roll shape.

However, Korean Patent Publication No. 2003-0025396 has the following problems.

First, the type of protruding the first protrusion from one side surface of the belt coupling hole or the type of forming the first protrusion and the second protrusion at one side surface and the other side surface of the belt coupling hole (i.e., the long hole) is advantageous in dispersing a tensile pressure applied to the belt by more increasing an area (hereinafter, referred to as a "contact area") coming in contact with the belt compared to a belt coupling hole with no protrusion. However, from a structural view, there is a limit in a thickness given to the first protrusion or the first, second protrusions. Thus, there is a limit in increasing the contact area and, when a pressure is applied to the belt, because a deformation of each protrusion does not occur and a distribution of a force is not made, there is a problem that all forces are concentrated on the belt and the belt is broken.

Second, compared to the aforementioned types, the type in which the first protrusion is of the cylindrical roll shape is advantageous in dispersing a tensile pressure because partially increasing a contact area. However, because a front end of the protrusion is constructed to get in contact with one surface of a belt coupling through a curling process, there is a problem that, when a tensile pressure is applied to a belt, as its shape deformation is impossible, a distribution of the tensile pressure is not accomplished in orderly fashion.

In actual, the aforementioned problems can be identified even in the tensile test result. When a force of 1,800kgf/cm² was applied to the belt, the protrusions of the above types could obtain the result in which their shape deformations do not occur and the belt is broken.

### SUMMARY OF THE INVENTION

An aspect of exemplary embodiments of the present invention is to address at least the problems and/or disadvantages and to provide at least the advantages described below. Accordingly, an aspect of exemplary embodiments of the present invention is to provide a belt coupling for a safety belt buckle with an improved belt bushing for, by improving a structure of a protrusion, when a pressure is applied to a belt, smoothly dispersing the pressure and preventing a breakage of the belt.

Another aspect of exemplary embodiments of the present invention is to provide a belt coupling for a safety belt buckle for corresponding to a higher tensile pressure by achieving a shape deformation of a protrusion by a pressure applied to a belt.

To achieve these and other advantages and in accordance with the purpose of the present invention, there is provided a belt coupling for a safety belt buckle in which a protrusion is provided at a belt coupling hole in which a belt is wound. The protrusion is bent in a semicircular shape such that its front end is spaced a predetermined distance apart from one surface of the belt coupling and, in the inside, a shape deformation space is provided.

### BRIEF DESCRIPTION OF THE DRAWINGS

The above and other objects, features and advantages of the present invention will become more apparent from the following detailed description when taken in conjunction with the accompanying drawings in which:

FIG. 1 is a construction diagram for describing a conventional vehicle safety belt;

FIG. 2 is a perspective diagram for describing a construction of a belt coupling of a conventional buckle;

FIG. 3 is a perspective diagram for describing a belt coupling for a safety belt buckle according to the present invention;

FIG. 4 is a side diagram for describing a belt coupling for a safety belt buckle according to the present invention;

FIG. 5 is a process diagram for describing a manufacturing process of a belt coupling for a safety belt buckle according to the present invention; and

FIG. 6 is a section of main parts taken for describing an operation state of a belt coupling for a safety belt buckle according to the present invention.

Throughout the drawings, the same drawing reference numerals will be understood to refer to the same elements, features and structures.

### DETAILED DESCRIPTION OF THE INVENTION

Exemplary embodiments of the present invention will now be described in detail with reference to the annexed drawings. In the following description, a detailed description of known functions and configurations incorporated herein has been omitted for conciseness.

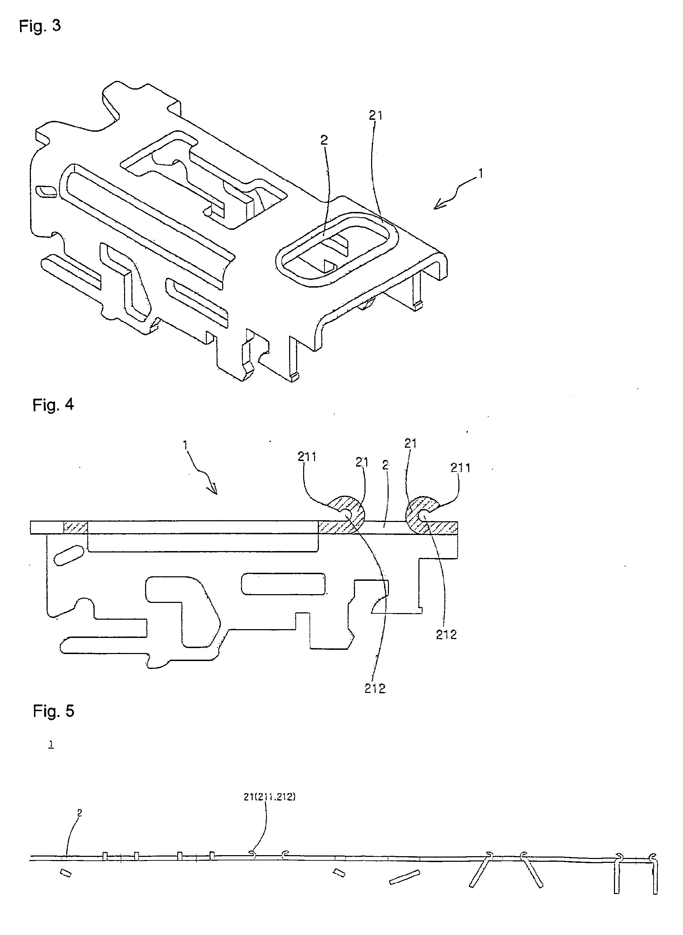

FIG. 3 is a perspective diagram for describing a belt coupling for a safety belt buckle according to the present invention. FIG. 4 is a side diagram for describing the belt coupling for the safety belt buckle according to the present invention.

Referring to FIGS. 3 and 4, the belt coupling 1 of the present invention has a protrusion 21 provided at a belt coupling hole 2 in which a belt is wound, and has a shape deformation space 212 provided at the protrusion 21.

Here, the belt coupling 1 according to the present invention is a constituent element of a buckle installed at one side of a seat and selectively fixing a tongue as above. The belt coupling 1 includes the belt coupling hole 2 for connecting the belt fixed to a seat of a vehicle, etc. by a fixer.

In the present invention, in providing the protrusion 21 at the belt coupling hole 2, a front end 211 of the protrusion 21 is bent in a semicircular shape such that the front end 211 is spaced a predetermined distance apart from one surface of the belt coupling 1, thereby providing a shape deformation space 212 in the inside.

As in FIG. 4, as the front end 211 of the protrusion 21 is bent to have a semicircular shape, the shape deformation space 212 of the protrusion 21 is formed to have a semicircular shape, i.e., a semicircular shape whose portion is opened, in the inside of a bent portion.

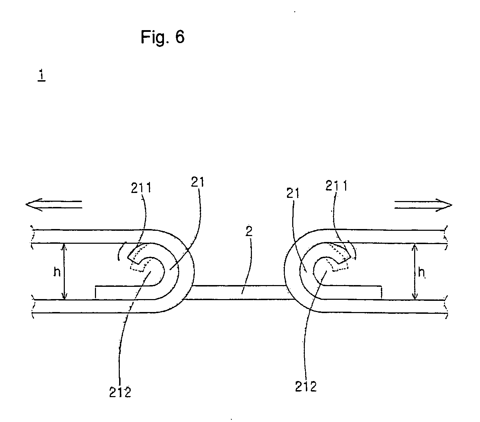

In addition, as the front end 211 of the protrusion 21 is bent in the semicircular shape, the protrusion 21 can be designed to have a height ('h' of FIG. 6) higher compared to the conventional art, thus being able to increase a contact area with the belt 3.

Through a plurality of burring processes and curling processes, the protrusion 21 is bent to have the semicircular shape. FIG. 5 is a process diagram for describing a manufacturing process of a belt coupling for a safety belt buckle according to the present invention.

Referring to FIG. 5, in a process of manufacturing the belt coupling 1, the protrusion 21 is formed through a slotting process of puncturing the belt coupling hole 2, primary and secondary burring processes, and a curling process.

An operation state of the above-constructed belt coupling for the safety belt buckle according to the present invention is described below.

FIG. 6 is a section of main parts taken for describing an operation state of a belt coupling for a safety belt buckle according to the present invention.

Referring to FIG. 6, in the belt coupling 1 of the present invention, as the front end 211 of the protrusion 21 provided at the belt coupling hole 2 is spaced a predetermined distance apart from one surface of the belt coupling 1 and in addition the shape deformation space 212 is provided in the inside, when a tensile pressure is applied to the belt 3 wound in the belt coupling hole 2, the front end 211 of the protrusion 21 is deformed in a form of being bent in a shape deformation space 212 direction, that is, one surface direction of the belt coupling 1. Accordingly, because a pressure is properly distributed to the belt 3 and the protrusion 21, a tensile value higher by about 500kgf/cm² to 600kgf/cm² compared to the conventional art can be obtained. In actual, the tensile test obtained the result in which the belt coupling hole 2 having the protrusion 21 of the present invention endures a tensile pressure up to 2,400kgf/cm², and obtained the result in which, more than it, the belt coupling hole 2 is damaged and the belt 3 is stretched.

Accordingly, by improving the structure of the protrusion, the belt coupling 1 of the present invention can prevent a phenomenon in which the belt is broken by a pressure as in the conventional art.

As described above, by improving a structure of a protrusion, a belt coupling for a safety belt buckle according to the present invention has an effect of, when a pressure is applied to a belt, smoothly dispersing the pressure to the belt and a belt coupling hole, thus being able to prevent a breakage of the belt. In addition, the belt coupling has an advantage of being able to correspond to a higher tensile pressure by achieving a shape deformation of the protrusion using the pressure applied to the belt.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A belt coupling (1) for a safety belt (100) buckle (300) in which a protrusion (21) is provided at a belt coupling hole (2) in which a belt (340) is wound,
wherein the protrusion (21) is bent in a semicircular shape such that its front end (211) is spaced a predetermined distance apart from one surface of the belt coupling (1) and, in the inside, a shape deformation space (212) is provided.

2. The belt coupling according to claim 1, wherein the front end (211) of the protrusion (21) faces said one surface of the belt coupling (1).

3. The belt coupling according to claim 1 or 2, wherein the shape of the protrusion (21) is deformed when a tensile force is applied to said belt (340).

4. The belt coupling according to any of claims 1, 2 or 3, wherein the protrusion (21) is deformed when a tensile force is applied to said belt (340) such that said front end (211) is directed towards said one surface of the belt coupling (1)

5. The belt coupling according to any of the preceding claims, wherein said belt coupling (1) is formed from a metal plate and said predetermined distance is equal or larger than the thickness of said metal plate.

6. The belt coupling according to claim 5, wherein the protrusion (21) has a height (h) which is at least three times the thickness of said metal plate.
